# EUROPEAN PATENT SPECIFICATION

(11) **EP 3 095 771 B1**
(45) Date of publication and mention of the grant of the patent: **06.03.2019**
(21) Application number: 16169598.6
(22) Date of filing: 13.05.2016
(51) Int. Cl.: C05F 17/02, F26B 9/10, F26B 21/00

(54) **INSTALLATION FOR THE TREATMENT OF A BIOLOGIC WASTE MATERIAL WITH AIR**
ANLAGE ZUR BEHANDLUNG VON BIOLOGISCHEN RESTOFFEN MITTELS LUFT
INSTALLATION DE TRAITEMENT DE DECHETS D'ORIGIN BIOLOGIQUE AVEC DE L'AIR

(30) Priority: 21.05.2015 NL 2014839
(43) Date of publication of application: 23.11.2016
(73) Proprietor: Upcycling Gemert B.V., 5421 XC Gemert (NL)
(72) Inventor: VAN DEN BOOMEN, Johannes Maria Franciscus, 5421 XC Gemert (NL); VAN DEN BOOMEN, Henricus Nicolaas Cornelis, 5421 XC Gemert (NL)
(74) Representative: Algemeen Octrooi- en Merkenbureau B.V.

(56) References cited:
- EP-A1- 0 397 645
- WO-A2-2006/120517
- WO-A2-2014/116114
- CA-A1- 2 306 658
- DE-A1- 2 551 599
- US-A1- 2003 024 686

## Description

The present invention relates to a device for treating a residual biomaterial with air, wherein the residual biomaterial lies on a floor surface, which device comprises means for supplying air to the aforesaid residual biomaterial. The present invention further relates to a method for treating a residual biomaterial with air, using the device as described above, as well as to the special use of such a device.

Drying is a mass transfer process which consists of the removal of water or moisture from the solid substance through evaporation. In the most frequent case a gas flow, for example air, is used, which discharges the vapour as air humidity. Other possibilities for drying include vacuum-drying, tumble drying, dielectric drying (using microwaves), freeze drying, supercritical drying (using superheated steam), and drying by means of natural air. The reduction of the water content can also be carried out by centrifugation, for example.

In particular in the cultivation of mushrooms a considerable amount of residual biomaterial is produced. A mushroom farm in principle needs two elements for growing mushrooms: colonised compost, also referred to as culture medium, and casing soil. Colonised compost contains the necessary nutrients for the mushroom. Suitable sources for the culture medium are, for example, horse manure with straw, poultry manure and lime. Casing soil, usually consisting of a mixture of different types of peat and spent lime (a by-product from the sugar industry) provides the supply of water to the culture medium, prevents dehydration of the culture medium and provides an advantageous environment in which mushrooms can form buttons. The casing soil is preferably free of pathogenic organisms and has the correct structure, it must have a pH of about 7.5 and be capable of retaining moisture. The bacteria that live in the casing soil stimulate the mycelium to produce the mushrooms; without these bacteria, no mushrooms will grow, so that good casing soil is paramount in the cultivation of mushrooms.

Generally a layer of about 35 cm of colonised compost or culture medium is provided in the growing beds. On the layer of colonised compost, a top layer of about 4.5 cm, also called casing soil, is provided. From the compost, mycelium threads grow into the casing soil. The threads form small buttons here, which in turn grow out into fully grown mushrooms, after which harvesting can begin. In the mushroom growing industry, a harvesting period is indicated by the specialist term "flush". A mushroom farmer harvests two or three flushes per bed.

Mushroom compost or colonised compost is the culture medium for growing mushrooms and is usually composed of manure, such as horse manure with straw, poultry manure and lime. The mushroom compost is colonised with mycelium. Usually a top layer, for example of peat, is placed on top of the mushroom compost, which layer functions as casing soil for the purpose of maintaining an optimum moisture content while the mushrooms are growing.

In current-day practice, spent mushroom compost, i.e. mushroom compost which becomes available after the mushrooms have been harvested, is discharged as fertilizer, whether or not generally together with the casing soil placed on the mushroom compost for cultivating the mushrooms. A drawback of discharging spent mushroom compost as fertiliser is that the product has limited added value and that, moreover, the transport costs are high.

From International application WO 2014/116114 there is known a method for composting spent mushroom compost under conditions for providing composted spent mushroom compost with a dry matter content of 45% to 90%, which method includes a step of separating the spent mushroom compost from the casing soil prior to the composting of the spent mushroom compost. Said International application WO 2014/116114 further discloses that the casing soil is dried, using heat obtained by composting the spent mushroom compost. Such casing soil is used as potting compost or manure concentrate. Said International application does not provide any information regarding the manner in which the drying step is carried out.

From Dutch patent No. 194986 there is known a method for processing mushroom feet by removing the mushroom feet from the bed in which the mushrooms are grown, followed by the steps of cutting, drying and mechanically separating the remaining casing soil therefrom. Information regarding the manner in which the drying step is carried out is not provided in this Dutch patent, either.

From European patent application EP 2 455 357 there is known a method for treating mushroom compost, comprising the steps of supplying the compost to be treated to a first separator, such as a screen, so as to obtain a first fraction comprising smaller compost particles, and a second fraction comprising larger compost particles, partially removing water from the larger compost particles, colouring said partially dried material using a colorant material, and further removing water from the coloured material so as to obtain thus treated compost. Additional information regarding the manner in which the drying step is carried out is not provided in said European patent application, either.

From International application WO 2012/101213 there is further known a method for recycling used mushroom casing soil comprising mushroom waste residue. In addition to that, International application WO 2013/108196 discloses a method for preparing casing soil for use in the cultivation of mushrooms, and from British publication GB 2 166 633 and US patent US 4,978,501 there is known a method for continuous sterilisation of moist horticultural material, wherein the material to be treated is passed through a tunnel where it is exposed to radio frequency electromagnetic waves.

Japanese publication JP 2002-346513 relates to a fermentation tank in which a composting process is carried out. Under the floor of such a fermentation tank a pipe system is installed, wherein a heat transfer medium, for example hot water, is supplied to an inner pipe, after which air is carried into the annular space between the outer pipe and the inner pipe. The air being blown in is thus heated by the hot water that flows through the inner pipe, which heated air can subsequently exit the outer pipe via the openings provided therein. Such a system consisting of a closed inner pipe and an apertured outer pipe, which is placed in a sort of housing, is thus installed in the floor surface on which the fermenter is disposed. Because the housing is only open at the upper side, the air exiting the openings in the outer pipe can only exit the housing via the open upper side thereof, and the material to be fermented, which is present on the floor, will come into contact with the air flow for being dried and fermented. From said Japanese document it is thus known to install a pipe system in a floor for passing hot air through the floor via said system. There is no question of an air flow efficiently directed at the floor, however.

German Offenlegungsschrift DE 25 51 599 relates to concrete panels to serve as an underlay base for the storage of waste, sewage sludge, manure and other rotting wastes, which is being kept so that it can be converted into compost. The longitudinal sides of the panels are tongued and grooved for joining together. Inside the concrete panel a continuous through channel is present that runs parallel to the longitudinal sides and two inclined channels leading off from this, on one end face, into the area of the top lateral edges. The side edges of the plate surface are inclined at an angle of about 450, and the two channels extend obliquely upward from the continuous through-channel so that they exit in the upper region.

CA 2 306 658 relates to a channel with dual function to firstly aerate organic matter during the active stage of a composting process and secondly remove liquid generated during the process. The channel has on both top ends of the V-shaped or W-shaped sidewalls of the channel recesses to accommodate a perforated cover of the channel. The channel is further provided with a connection to an air distribution or removal system and a liquid collection and removal system.

International application WO 2006/120517 relates to a waste treatment system comprising a permeable material container adapted to accommodate the waste, and presenting at least one opening for introducing the waste, air-tight closing means of the opening, percolate introducing means within the permeable material container, means for collecting the formed biogas, a covering layer arranged at an upper portion of the container, and a recirculation system of the air within the container. The air recirculation system comprises a plurality of air intake tubes arranged between the impermeable container and the covering layer and a plurality of air intakes arranged within the container.

European patent application EP 0 397 645 relates to an apparatus for introducing gases into fixed bed filters, in particular biological filters with a distributor from which the gas is forced out and passed through the filter material, the distributor being formed from channel-shaped profiles on which lids are placed, wherein the gas passage openings are formed on the mutually abutting regions of the cover and of the channel-shaped profile.

In the agricultural industry, use is made of cellars, over which so-called grid floors are installed, for drying wet residues. Such grid floors can be regarded as floors provided with long slots.

One aspect of the present invention is to provide a method for treating residual biomaterials with air in an environmentally friendly and efficient manner so as to thus reprocess the residual material into usable residue.

Another aspect of the present invention is to provide a method for processing specific residual biomaterials, in particular casing soil and spent mushroom compost, which two materials are used in the cultivation of mushrooms on a nutrient medium, wherein the spent casing soil and the spent mushroom compost are subjected to a treatment so as to prepare them for a new use.

Another aspect of the present invention is to provide a method for treating residual biomaterials with air in an environmentally friendly and efficient manner, wherein the amount of energy to be used is minimised.

The present invention thus relates to a device for treating a residual biomaterial with air, wherein the residual biomaterial is present on a floor surface, which device comprises means for supplying air to said residual biomaterial, wherein said means for supplying air comprise a number of regularly spaced pipes positioned under said floor surface, which pipes comprise at least two outlet openings arranged at an angle in the circumference thereof, which outlet openings are positioned at regular intervals along the length of said pipe, wherein said pipes are positioned in such a manner under said floor surface that said outlet openings supply air to said residual biomaterial.

The present inventors have found that one or more of the aforesaid aspects are achieved by carrying out the aforesaid steps. It has in particular been found to be advantageous to place said outlet openings at an angle, which makes it possible to realise a good distribution of the air to be supplied in the residual biomaterial present on the floor surface. Because use is made of pipes positioned at regular intervals under the floor surface, the outlet openings, which are arranged at an angle and which are present in the circumference of the pipe, will "blow" the air at a specific angle to the residual material to be treated. Because of said angular orientation, the air flows from the pipes disposed beside each other will "cross" each other at a particular height above the floor surface, thereby creating a good air circulation in the residual biomaterial to be treated. This prevents areas of the residual biomaterial that is to be treated from having insufficient airflow. Thus a "directed" air flow takes place, which prevents the formation of so-called "dead" areas in the residual biomaterial to be treated. In addition, the residual biomaterials to be treated usually have a fine structure, so that special means for supplying air are needed. It has moreover been found that the present device and method, which will be explained in more detail hereinafter, make it possible to realise shorter processing times and lower energy consumption levels in comparison with the prior art floors.

It has in particular been found to be desirable to select the angle at which the outlet openings are arranged within the range of 30 -150°, in particular 50 - 130°, and preferably 80 - 110°. In the case of an angle at which the outlet openings are arranged of less than 30°, areas to which insufficient air is led will form on the floor surface, resulting in an inhomogeneous air treatment. An angle at which the outlet openings are arranged of more than 150° will also result in a situation in which an insufficient amount of air is led to specific areas on the floor surface, and thus to an inhomogeneous air treatment. The term "angle" that is used herein is to be regarded as the angle included between an imaginary line through one outlet opening and an imaginary line through the other outlet opening, which outlet openings are present in one and the same pipe. If the angle is 90°, for example, the outlet openings will be oriented perpendicular to each other. In the case of an angle in the region of the aforesaid lower limit of 30°, the outlet openings will be "close" together, therefore. In the case of an angle in the region of the aforesaid upper limit of 150°, on the other hand, the outlet openings will be "far" apart.

The present invention is not limited to a special number of outlet openings provided on the circumference of the pipe. It is in particular desirable to arrange the outlet openings "in pairs", which means that, seen in the longitudinal direction of the pipe, the outlet openings are arranged two by two on the same pipe. In a special embodiment it is desirable, however, to arrange the outlet openings in "staggered" relationship, seen in the longitudinal direction of the pipe, so that such a pipe in fact comprises at least two side-by-side rows of outlet openings, wherein the positions of the outlet openings are shifted relative to each other in the rows, so that there is no (longer) question of pairs of outlet openings in the same pipe.

It is preferable if said outlet openings are positioned a regular distance apart along the length of said pipe, thereby ensuring that the residual biomaterial present on the floor surface is homogeneously treated with air. The spacing between said outlet openings, seen along the length of said pipe, is preferably at least 5 cm, in particular 10 cm, in particular at least 15 cm.

The end of the outlet opening that faces away from the pipe is substantially level with the upper side of the floor surface. Thus, a substantially flat upper surface is obtained, and the outlet openings will not "project" from the upper surface. In particular when the floor surface is being "filled' with residual biomaterial, during which use may be made of heavy equipment such as forklift trucks, shovels, dumper trucks, wheelbarrows, it is desirable that no obstacles are present on the floor surface. Furthermore, people may walk on the floor surface, in which case it is desirable that no "projections" are present.

In the present device it is in particular desirable that the aforesaid pipes are positioned a regular distance apart under the floor surface, in which case the pipes are preferably arranged parallel to each other. From a constructional point of view it is preferable to encase the pipes in a concrete composition, possibly reinforced with the means generally used for that purpose, such as a mesh.

The spacing between said pipes is preferably at least 10 cm, in particular 20 cm, more in particular at least 30 cm, wherein said pipes in particular have a diameter ranging from 100 - 300 mm, in particular 150 - 250 mm, preferably 175 - 225 mm. The selection of the material for the pipe is not limited, but it is preferable to use plastic pipes. The supply of air to the pipes can take place via separate supply pipes, but it is preferable to use a central supply pipe, wherein the individual pipes are provided with air via a branch element.

In a special embodiment it is desirable that at least one of said pipes is provided with additional outlet openings provided in the circumference thereof, which additional outlet openings are oriented substantially perpendicular to the floor surface and which are positioned at regular intervals along the length of said pipe. In such an embodiment there will also be a perpendicular air flow, i.e. an air flow directed perpendicular to the floor surface. Using such a construction of outlet openings, an additional air flow is created besides the aforesaid "crossed" air flow so as to thus realise an optimum treatment of the residual biomaterial. In a preferred embodiment, the additional outlet openings are thus positioned "between" the at least two outlet openings arranged at an angle relative to each other in the circumference of in the pipe in question.

The present invention further relates to a method for treating a residual biomaterial with air, using the device as described in the foregoing, which method comprises the following steps:
i) applying residual biomaterial to the floor surface;
ii) supplying air to the pipes; and
iii) passing air through the residual biomaterial that is present on the floor surface.

From an energetic and ecological point of view it is desirable that the air flow that exits the residual biomaterial is reused. During the treatment with air, heat is usually generated in the residual biomaterial, which heat can be recovered. The treatment with air may also comprise a composting method.

The treatment with air is in particular carried out in a space that is closed off from the environment. It is preferable in that case that the temperature and/or humidity in the space in which said treatment with air is carried out is controlled by a measuring and control system.

The present inventors have established that the rate of the air flow to be supplied to the pipes in particular ranges from 0 - 70 m/s, in particular 20 - 60 m/s, preferably 30 - 50 m/s.

The air to be supplied according to step ii) has a temperature that ranges from 5-50 °C, in particular 10 - 40 °C, preferably 10 - 30 °C.

In a special embodiment it is possible to subject the air flow to be supplied to a pre-treatment, for example influencing the temperature and the air humidity. Furthermore it has been found to be desirable to vary one or more process parameters selected from the group of flow rate, temperature and air humidity of the air flow to be supplied to the pipes during the aforesaid treatment with air. This means that it is possible to adjust one or more of flow rate, temperature and air humidity, for example, while the present method is being carried out. Thus, different treatment programs can be used, for example depending on the residual material with which the process is started, or depending on the desired end product. A suitable residual biomaterial is a residual material obtained in the cultivation of mushrooms, in particular spent casing soil and spent nutrient medium. Suitable residual biomaterials that can be treated with the present invention comprise: mushroom compost, garden and kitchen waste, sludge obtained from water purification and other treatments, roadside grass, vegetable waste, chicken manure, paper sludge, coconut residue, goat manure, cow manure, pig manure, mink manure, rabbit manure, leek (vegetable) waste, wood chips, digestate obtained from fermentation, household waste, agricultural and food residue, ditch dredging waste, incontinence material, napkins, sugar beet tops, sugar beet ends, tomato leaves, cucumber leaves, paprika leaves and potato starch.

In the method according to the present invention it is furthermore possible to add one or more additives, preferably selected from the group consisting of lime, phosphorous and nitrogen, to the residual biomaterial, preferably after the drying treatment. Such additives serve to prepare the treated residual biomaterial for a particular use. This is for example done by adding lime so as to adjust the acidity. An example is to use ground eggshells as the lime additive, which additive also contains other components, such as zinc, in addition to a high percentage of lime. It is also possible to turn over the residual biomaterial present on the floor surface during or after the treatment with air. The term "turning over" is to be understood to include the working up, ploughing up or rooting up of the residual biomaterial, which will speed up the maturing process of the residual products so present in the residual biomaterial. In a special embodiment of the present methods it is desirable that the residual biomaterial is subjected to a reducing step prior to the treatment with air.

The present invention further relates to the use of the above-described device for composting the residual material obtained in the cultivation of mushrooms.

The present invention further relates to the use of the above-described device for drying the residual material obtained in the cultivation of mushrooms.

The present invention will now be explained with reference to a number of figures, which figures are not to be construed as limitative.
Figure 1 is a top plan view of the present device.
Figure 2 is a front view of the present device as shown in figure 1.
Figure 3 is a front view of another embodiment of the present invention.

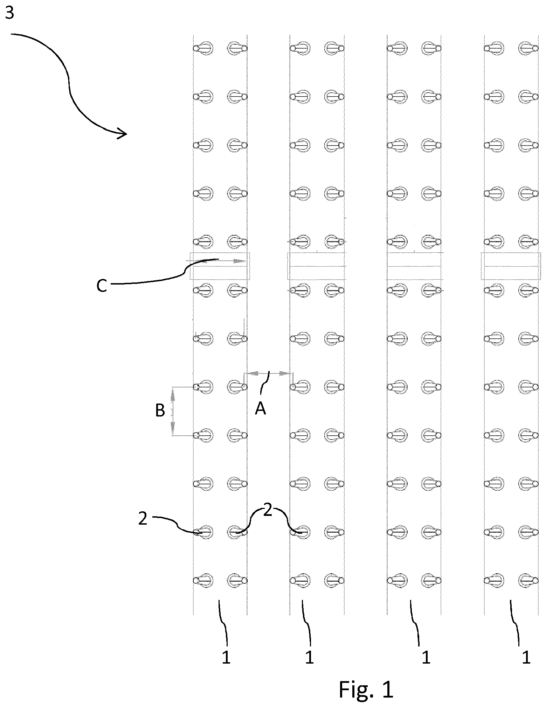

In figure 1 a top plan view of the floor according to the present invention is schematically indicated by numeral 3. The floor 3 is made up of a number of pipes 1 arranged beside and parallel to each other, in the circumference of which pipes outlet openings 2 are provided. The pipes 1 are spaced a mutual distance A apart. The diameter of the pipes 1 is indicated at C. The spacing between said outlet openings 2 in the longitudinal direction of said pipe 1 is indicated at B. Although only four pipes 1 are shown in figure 1, it should be understood that the present invention is by no means limited to such a number of pipes. The pipes 1 shown in figure 1 all have the same diameter C, but in a special embodiment pipes having different diameters may be used. Furthermore, pipes having a diameter which is not constant, seen along the length of the pipe, may be used. According to another possibility, additional conduits (not shown) may be present between the pipes 1, for example pipes to transporting liquids, cables for transporting electricity and the like. Although all the pipes 1 exhibit outlet openings 2 arranged side by side, which can also be regarded as pairs of side-by-side outlet openings, the outlet openings may also be staggered (not shown) relative to each other, seen along the length of the pipe, so that the term "pair" of outlet openings 2 does not really apply here.

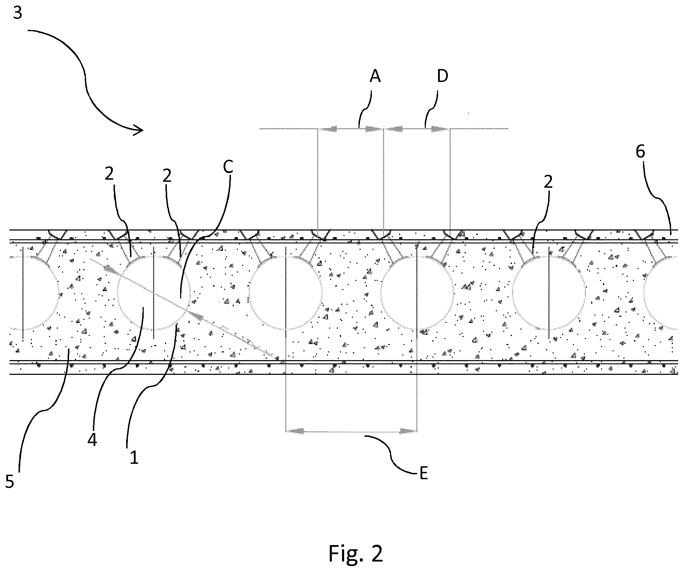

Figure 2 schematically shows a front view of the present invention as shown in figure 1. The pipes 1 disposed beside each other have a cross-section 4 through which air is passed. The air exits the pipe 1 via the outlet openings 2 arranged at an angle in the circumference thereof. The end of the outlet opening 2 that faces away from the pipe 1 is substantially level with the upper side of the floor surface 6. The residual biomaterial to be treated (not shown) is deposited on the floor surface 6. The spacing between two outlet openings 2 arranged beside each other in the pipe 1 is indicated at B. The spacing between two outlet openings 2 located beside each other (of different pipes 1 disposed beside each other) is indicated at A. The spacing between two such pipes 1 disposed beside each other is indicated at C.

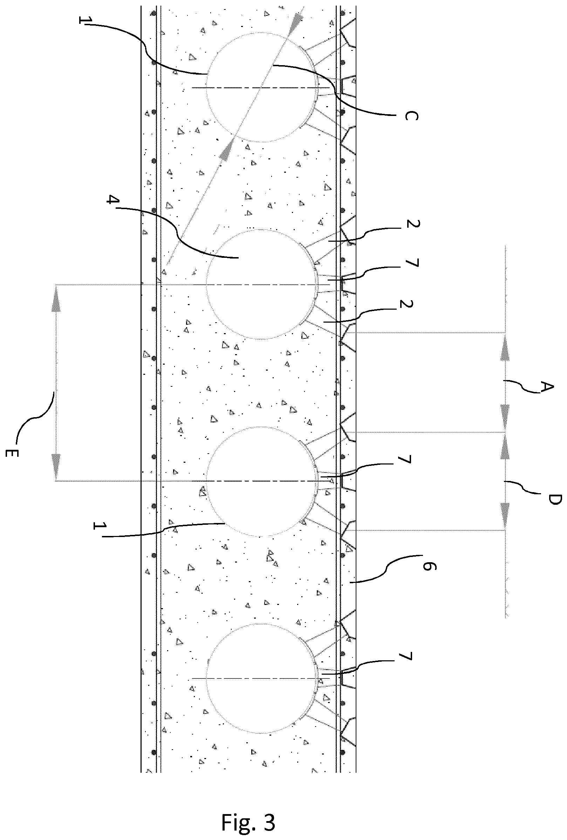

Figure 3 shows a schematic front view of another embodiment of the present invention. The pipes 1 disposed beside each other have a cross-section 4 through which air is passed. The air exits the pipe 1 via the outlet openings 2 arranged at an angle in the circumference thereof, whilst an additional outlet opening 7 is furthermore present in the circumference of the pipe 1. From the schematic representation it appears that the air exiting the additional outlet opening 7 exits the floor surface 6 substantially perpendicularly thereto. The ends of the outlet opening 2 and the additional outlet opening 7 are substantially level with the upper side of the floor surface 6. The residual biomaterial to be treated (not shown) is deposited onto the floor surface 6. From figure 3 it follows that three outlet openings 2, 7 are present in the circumference of the pipe 1. The air flows exiting outlet openings 2 of pipes disposed beside each other will cross above the floor surface 6. In this way a good through-flow of air is realised, to which the perpendicular air flow from the additional outlet opening 7 is added. The spacing between two outlet openings 2 located beside each other on the pipe 1 is indicated at D. The spacing between two outlet openings 1 located beside each other (of different pipes 1 disposed beside each other) is indicated at A. The spacing between such pipes 1 disposed beside each other is indicated at E. Although figure 3 shows a front view with four pipes, each of which pipes is provided with three outlet openings in the circumference thereof, it is desirable in specific embodiments that only a specific number of pipes are provided with such a centrally positioned outlet openings. Furthermore it is desirable in specific embodiments that such centrally positioned outlet openings are only present at specific intervals along the length of the pipe. In such an embodiment the spacing B between the additional outlet openings 7 is for example greater than the spacing B between the outlet openings 2, in both cases measured on one and the same pipe. Furthermore, the position of the additional outlet opening 7 of one pipe may be "staggered" relative to that of an additional outlet opening 7 of an adjacent pipe.

In the figures, like parts are indicated by the same reference numerals.

It is preferable that A, viz the spacing between the aforesaid pipes 1, is at least 10 cm, in particular 15 cm, preferably at least 20 cm, in particular at most 40 cm.

It is preferable that B, viz the spacing between the aforesaid outlet openings 2 and any additional outlet openings 7 that may be present (see figure 3), seen in the longitudinal direction of said pipe 1, is at least 5 cm, in particular 10 cm, preferably at least 15 cm, in particular at most 20 cm.

It is preferable that C, viz the diameter of the aforesaid pipes 1, ranges from 100 - 300 mm, in particular 150 - 250 mm, preferably 175 - 225 mm.

It is preferable that B, viz the spacing between two outlet openings 2 positioned beside each other on one and the same pipe 2, ranges from 140 - 210 mm, preferably 150 - 190 mm, in particular 155 - 170 mm.

It is preferable that A, viz the spacing between two pipes arranged beside each other, ranges from 320 - 400 mm, preferably 330 - 390 mm, in particular 350 - 370 mm.

## Claims

1. A device for treating a residual biomaterial with air, wherein the residual biomaterial is present on a floor surface (6), which device comprises means for supplying air to said residual biomaterial, **characterised in that** said means for supplying air comprise a number of regularly spaced plastic pipes(1) positioned under said floor surface (6), the end of the outlet opening (2) that faces away from the plastic pipe (1) is substantially level with the upper side of said floor surface (6), which plastic pipes (1) comprise at least two outlet openings (2) arranged at an angle in the circumference thereof, which outlet openings (2) are positioned at regular intervals along the length of said plastic pipe (1), wherein said plastic pipes(1) are positioned in such a manner under said floor surface (6) that said outlet openings (2) supply air to said residual biomaterial, wherein the plastic pipes (1) are encased in a concrete composition (5).

2. A device according to claim 1, **characterised in that** said pipes are positioned parallel to each other.

3. A device according to one or more of the preceding claims, **characterised in that** the spacing between said outlet openings, seen along the length of said pipe, is at least 5 cm, in particular 10 cm, preferably at least 15 cm, in particular at most 20 cm.

4. A device according to one or more of the preceding claims, **characterised in that** the spacing between said pipes is at least 10 cm, in particular 15 cm, preferably at least 20 cm, in particular at most 40 cm.

5. A device according to one or more of the preceding claims, **characterised in that** the angle at which the outlet openings are arranged ranges from 30 -150°, in particular 50 - 130°, and preferably 80 - 110°.

6. A device according to one or more of the preceding claims, **characterised in that** said pipes have a diameter ranging from 100 - 300 mm, in particular 150 - 250 mm, preferably 175 - 225 mm.

7. A device according to one or more of the preceding claims, **characterised in that** at least one of said pipes is provided with additional outlet openings (7) provided in the circumference thereof, which additional outlet openings (7) are oriented substantially perpendicular to the floor surface and which are positioned at regular intervals along the length of said pipe.

8. A method for treating a residual biomaterial with air, using the device as defined in one or more of the preceding claims, which method comprises the following steps:
i) applying residual biomaterial to the floor surface;
ii) supplying air to the plastic pipes; and
iii) passing air through the residual biomaterial that is present on the floor surface.

9. A method according to claim 8, **characterised in that** the air flow that exits the residual biomaterial is reused, in particular that the heat that is present in the air flow that exits the residual biomaterial is recovered.

10. A method according to one or both of the preceding claims 8 - 9, **characterised in that** the treatment with air is carried out in a space that is closed off from the environment, wherein preferably the temperature and/or humidity in the space in which said treatment with air is carried out is controlled by a measuring and control system, in particular that one or more process parameters selected from the group of flow rate, temperature and air humidity of the air flow to be supplied to the pipes are varied during the aforesaid treatment with air.

11. A method according to any one or more of the preceding claims 8 - 10, **characterised in that** the residual biomaterial is a residual material obtained in the cultivation of mushrooms.

12. Use of a device as defined in one or more of claims 1 - 7 for composting and/or drying a residual material obtained in the cultivation of mushrooms.

## Patentansprüche

1. Vorrichtung zum Behandeln eines Biomaterialreststoffs mit Luft, wobei der Biomaterialreststoff auf einer Bodenfläche (6) vorliegt und die Vorrichtung Mittel zum Bereitstellen von Luft an den Biomaterialreststoff umfasst, **dadurch gekennzeichnet, dass** die Mittel zum Bereitstellen von Luft mehrere in regelmäßigen Abständen angeordneter Kunststoffrohre (1) umfassen, die unter der Bodenfläche (6) positioniert sind, sich das Ende der Auslassöffnung (2), das von dem Kunststoffrohr (1) weg gerichtet ist, im Wesentlichen auf gleicher Höhe mit der Oberseite der Bodenfläche (6) befindet, wobei die Kunststoffrohre (1) mindestens zwei Auslassöffnungen (2) umfassen, die unter einem Winkel auf dem Umfang davon angeordnet sind, die Auslassöffnungen (2) in regelmäßigen Intervallen entlang der Länge des Kunststoffrohrs (1) positioniert sind, wobei die Kunststoffrohre (1) auf solche Weise unter der Bodenfläche (6) positioniert sind, dass die Auslassöffnungen (2) Luft an den Biomaterialreststoff bereitstellen, wobei die Kunststoffrohre (1) von einer Betonmischung (5) umhüllt sind.

2. Vorrichtung nach Anspruch 1, **dadurch gekennzeichnet, dass** die Rohre parallel zueinander positioniert sind.

3. Vorrichtung nach einem oder mehreren der vorangegangenen Ansprüche, **dadurch gekennzeichnet, dass** der Abstand zwischen den Auslassöffnungen, gesehen entlang der Länge des Rohres, mindestens 5 cm, insbesondere 10 cm, bevorzugt mindestens 15 cm und insbesondere höchstens 20 cm beträgt.

4. Vorrichtung nach einem oder mehreren der vorangegangenen Ansprüche, **dadurch gekennzeichnet, dass** der Abstand zwischen den Rohren mindestens 10 cm, insbesondere 15 cm, bevorzugt mindestens 20 cm und insbesondere höchstens 40 cm beträgt.

5. Vorrichtung nach einem oder mehreren der vorangegangenen Ansprüche, **dadurch gekennzeichnet, dass** sich der Winkel, unter dem die Auslassöffnungen angeordnet sind, zwischen 30 und 150°, insbesondere zwischen 50 und 130° und bevorzugt zwischen 80 und 110° bewegt.

6. Vorrichtung nach einem oder mehreren der vorangegangenen Ansprüche, **dadurch gekennzeichnet, dass** die Rohre einen Durchmesser aufweisen, der sich zwischen 100 und 300 mm, insbesondere zwischen 150 und 250 mm und bevorzugt zwischen 175 und 225 mm bewegt.

7. Vorrichtung nach einem oder mehreren der vorangegangenen Ansprüche, **dadurch gekennzeichnet, dass** mindestens eines der Rohre mit zusätzlichen Auslassöffnungen (7) versehen ist, die auf dem Umfang davon angeordnet sind, wobei die zusätzlichen Auslassöffnungen (7) im Wesentlichen rechtwinklig zu der Bodenfläche orientiert und in regelmäßigen Intervallen entlang der Länge des Rohres positioniert sind.

8. Verfahren zum Behandeln eines Biomaterialreststoffs mit Luft, unter Verwendung der Vorrichtung, wie in einem oder mehreren der vorangegangenen Ansprüche definiert, wobei das Verfahren die folgenden Schritte umfasst:
i. Aufbringen eines Biomaterialreststoffs auf die Bodenfläche;
ii. Bereitstellen von Luft für die Kunststoffrohre; und
iii. Hindurchleiten von Luft durch den Biomaterialreststoff, der auf der Bodenfläche vorliegt.

9. Verfahren nach Anspruch 8, **dadurch gekennzeichnet, dass** der Luftstrom, der den Biomaterialreststoff verlässt, wiederverwendet wird, insbesondere dadurch, dass die Wärme, die in dem Luftstrom vorhanden ist, der den Biomaterialreststoff verlässt, zurückgewonnen wird.

10. Verfahren nach einem oder beiden der vorangegangenen Ansprüche 8-9, **dadurch gekennzeichnet, dass** die Behandlung mit Luft in einem Raum durchgeführt wird, der von der Umgebung abgeschlossen ist, wobei bevorzugt die Temperatur und/oder die Feuchtigkeit in dem Raum, in dem die Behandlung mit Luft durchgeführt wird, durch ein Mess- und Regelsystem geregelt wird, insbesondere, dass ein oder mehrere Prozessparameter, die aus der Gruppe von Durchfluss, Temperatur und Luftfeuchtigkeit des den Rohren zuzuführenden Luftstroms ausgewählt werden, während der zuvor erwähnten Behandlung mit Luft variiert werden.

11. Verfahren nach einem oder mehreren der vorangegangenen Ansprüche 8-10, **dadurch gekennzeichnet, dass** der Biomaterialreststoff ein Restmaterial ist, das beim Anbau von Pilzen gewonnen wird.

12. Verwendung einer Vorrichtung gemäß Definition in einem oder mehreren der Ansprüche 1-7 für das Kompostieren und/oder Trocknen eines Restmaterials, das beim Anbau von Pilzen gewonnen wird.

## Revendications

1. Dispositif pour traiter un biomatériau résiduel à l'air, dans lequel le biomatériau résiduel est présent sur une surface de fond (6), lequel dispositif comprend des moyens pour fournir de l'air audit biomatériau résiduel, **caractérisé en ce que** lesdits moyens de fourniture d'air comprennent un nombre de tuyaux en matière plastique régulièrement espacés (1) positionnés sous ladite surface de fond (6), l'extrémité de l'ouverture de sortie (2) qui est opposée au tuyau en matière plastique (1) est essentiellement à niveau avec le côté supérieur de ladite surface de fond (6), lesquels tuyaux en matière plastique (1) comprennent au moins deux ouvertures de sortie (2) agencées selon un angle dans la circonférence de ceux-ci, lesquelles ouvertures de sortie (2) sont positionnées à intervalles réguliers sur la longueur dudit tuyau en matière plastique (1), où lesdits tuyaux en matière plastique (1) sont positionnés de manière à ce que, sous ladite surface de fond (6), lesdites ouvertures de sortie (2) fournissent de l'air audit biomatériau résiduel, où les tuyaux en matière plastique (1) sont enfermés dans une composition de béton (5).

2. Dispositif selon la revendication 1, **caractérisé en ce que** lesdits tuyaux sont positionnés parallèlement les uns aux autres.

3. Dispositif selon une ou plusieurs des revendications précédentes, **caractérisé en ce que** l'espacement entre lesdites ouvertures de sortie, vu sur la longueur dudit tuyau, est d'au moins 5 cm, en particulier de 10 cm, de préférence d'au moins 15 cm, en particulier d'au plus 20 cm.

4. Dispositif selon une ou plusieurs des revendications précédentes, **caractérisé en ce que** l'espacement entre lesdits tuyaux est d'au moins 10 cm, en particulier de 15 cm, de préférence d'au moins 20 cm, en particulier d'au plus 40 cm.

5. Dispositif selon une ou plusieurs des revendications précédentes, **caractérisé en ce que** l'angle selon lequel les ouvertures de sortie sont agencées se trouve dans une plage allant de 30 à 150°, en particulier de 50 à 130°, et de préférence de 80 à 110°.

6. Dispositif selon une ou plusieurs des revendications précédentes, **caractérisé en ce que** lesdits tuyaux ont un diamètre se trouvant dans une plage allant de 100 à 300 mm, en particulier de 150 à 250 mm, de préférence de 175 à 225 mm.

7. Dispositif selon une ou plusieurs des revendications précédentes, **caractérisé en ce qu'**au moins l'un desdits tuyaux est pourvu d'ouvertures de sortie supplémentaires (7) prévues dans la circonférence de celui-ci, lesquelles ouvertures de sortie supplémentaires (7) sont orientées essentiellement perpendiculairement à la surface de fond et sont positionnées à intervalles réguliers sur la longueur dudit tuyau.

8. Procédé pour traiter un biomatériau résiduel à l'air, en utilisant le dispositif tel que défini dans une ou plusieurs des revendications précédentes, lequel procédé comprend les étapes suivantes qui consistent :
i) à appliquer un biomatériau résiduel à la surface de fond ;
ii) à fournir de l'air aux tuyaux en matière plastique ; et
iii) à faire passer l'air à travers le biomatériau résiduel qui est présent sur la surface de fond.

9. Procédé selon la revendication 8, **caractérisé en ce que** le flux d'air qui sort du biomatériau résiduel est réutilisé, en particulier **en ce que** la chaleur qui est présente dans le flux d'air qui sort du biomatériau résiduel est récupérée.

10. Procédé selon l'une et/ou l'autre des revendications précédentes 8 et 9, **caractérisé en ce que** le traitement à l'air est réalisé dans un espace qui est isolé de l'environnement, où de préférence, la température et/ou l'humidité dans l'espace dans lequel ledit traitement à l'air est réalisé est/sont régulée(s) par un système de mesure et de régulation, en particulier **en ce qu'**un ou plusieurs paramètre(s) de procédé choisi(s) dans le groupe du débit, de la température et de l'humidité d'air du flux d'air à fournir aux tuyaux varie/varient lors du traitement à l'air susmentionné.

11. Procédé selon l'une quelconque ou plusieurs des revendications précédentes 8 à 10, **caractérisé en ce que** le biomatériau résiduel est un matériau résiduel obtenu lors de la culture de champignons.

12. Utilisation d'un dispositif tel que défini dans une ou plusieurs des revendications 1 à 7, pour composter et/ou sécher un matériau résiduel obtenu lors de la culture de champignons.
